Europäisches Patentamt

European Patent Office

Office européen des brevets

(11) Numéro de publication : **0 486 380 A1**

## (12) DEMANDE DE BREVET EUROPEEN

(21) Numéro de dépôt : **91403030.9**

(51) Int. Cl.⁵ : **G01K 11/06**

(22) Date de dépôt : **08.11.91**

(30) Priorité : **15.11.90 FR 9014341**
**04.01.91 FR 9100101**

(43) Date de publication de la demande :
**20.05.92 Bulletin 92/21**

(84) Etats contractants désignés :
**AT BE CH DE GB IT LI LU NL**

(71) Demandeur : **SOCIETE COOL S.a.r.l.**
**Quai Jean Jaurès Boîte Postale 45**
**F-07800 La Voulte sur Rhône (FR)**

(72) Inventeur : **Berrebi, Georges**
**17, rue Barnave**
**F-26500 Bourg les Valences (FR)**
Inventeur : **Toporenko, Yves**
**44, 46, rue Saint Maur**
**F-75011 Paris France (FR)**

(74) Mandataire : **Andreeff, François**
**INSTITUT FRANCAIS DU PETROLE 4, avenue**
**de Bois-Préau**
**F-92502 Rueil-Malmaison (FR)**

(54) Indicateur d'état de conservation pour produits réfrigérés ou congelés.

(57) L'invention concerne un indicateur de conservateur pour produits congelés ou réfrigérés.

L'indicateur est réalisé au moyen d'un étui par exemple en forme d'ampoule (1) renfermant un liquide ou une matière dont le point de congélation est prédéterminé, le dit étui pouvant éventuellement intégrer un ou plusieurs axes et contribuer à la conformation du témoin de fusion et à son centrage, à l'intérieur d'un boîtier étanche et transparent ou enveloppe de protection (2), lui même disposé, dans l'emballage à surveiller.

FIG.2

EP 0 486 380 A1

Jouve, 18, rue Saint-Denis, 75001 PARIS

La présente invention concerne un dispositif qui permet de reconnaître immédiatement, par un simple examen visuel, si un produit froid et surtout surgelé est propre ou non à la consommation.

Les surgelés sont des produits sûrs, fabriqués avec une extrême rigueur, présentant des intérêts incontestables sur le plan microbiologique (au-dessous de - 18 °C, les micro-organismes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne de froid. En dehors de l'examen des boîtes ou des paquets proposés sur le marché des consommateurs, cet examen n'étant d'ailleurs pas fiable, on ne trouve guère que le brevet français relatif aux produits surgelés (à - 18 °C au moins) n° 2626072 de Monsieur TOPORENKO proposant un moyen de détection simple et rapide d'une rupture de la chaîne du froid : en effet, le principe consiste à utiliser un petit glaçon de forme géométrique coloré dans sa masse, fluorescent de surcroît, moulé sur un support, le tout étant intégré à l'intérieur d'une minuscule boîte hermétique transparente qui accompagne l'emballage du produit surgelé d'une façon inviolable.

La présente invention concerne à la fois, d'une part, de nouvelles réalisations pratiques perfectionnées du dispositif de l'art antérieur et, d'autre part, également le mélange particulier de constitution sensiblement eutectique introduit à l'intérieur du dispositif selon l'invention : ce mélange, en changeant la nature du liquide eutectique permet d'obtenir des indications de conservation non seulement pour des produits surgelés mais également pour des produits moins froids, tels que les glaces à consommer sur place. Par exemple, or peut utiliser des mélanges aptes à contrôler des températures de l'ordre de 0 °C, - 5 °C, - 12 °C, - 16 °C, - 18 °C et - 21 °C.

Dans une première variante de l'invention, si la chaîne du froid est rompue, l'étui ne se fracture pas. Lors de la congélation, le mélange eutectique forme un glaçon. Si le produit alimentaire (ou autre) gelé ou surgelé subit accidentellement un phénomène de décongélation, le glaçon du dispositif fond et laisse apparaître le support sur lequel il a été moulé.

Dans une deuxième variante de l'invention, le mélange à base d'eutectique subit une congélation qui provoque une fracture de l'étui qui le contient. Puis, si, par accident, le produit alimentaire (ou autre), gelé ou surgelé subit ensuite un phénomène de décongélation, le glaçon du dispositif fond et laisse apparaître le support sur lequel il a été moulé.

L'appareillage avec son liquide à base d'un eutectique comprend un intégrateur de température qui prend en compte non seulement la variation de température, mais également sa durée. Il peut être utilisé pour le froid négatif et le froid positif. Ce procédé simple et peu coûteux, de l'ordre de quelques dizaines de centimes français par emballage de produit surgelé, a l'avantage d'avoir un fonctionnement irréversible et fiable.

La présente invention concerne notamment un dispositif destiné à être adjoint pan fixation (collage ou agrafage) à l'intérieur ou à l'extérieur de l'emballage de protection d'un produit réfrigéré à caractère alimentaire industriel, médical ou pharmaceutique.

Il comporte un témoin de fusion matérialisé par un volume géométrique obtenu par congélation d'une substance liquide qui est de préférence colorée dans sa masse, afin de la rendre plus visible de l'extérieur de l'emballage de protection dans lequel elle se trouve placée. Ce liquide peut être luminescent, fluorescent, phosphorescent selon les cas ; il est constitué par la congélation d'un liquide auquel sont mélangés différents adjuvants (produits colorants, luminescents fluorescents, phosphorescents, antigel) de façon à prédéterminer l'image thermique ou frigorifique du produit réfrigéré auquel il est adjoint. L'invention concerne également la nature préférée d'un tel liquide comme il sera décit ci-dessous.

Le témoin de fusion est placé au centre géométrique d'une enceinte hermétique qui peut être constituée d'un simple sachet ou étui. Dans le cas de la première variante (où l'étui ne se fracture pas), le sachet est en polypropylène ou en polyvinyle au moins en partie transparent lorsque la protection mécanique extérieure contre les chocs est assurée, ou d'une enveloppe rigide hermétique au moins en partie transparente résistante aux chocs lorsque la protection mécanique extérieure n'est pas garantie.

Toute modification de la forme géométrique du témoin avec ou sans liquéfaction prouvera que le produit réfrigéré a subi une variation d'état lors de sa période de conservation : ainsi une fusion complète du témoin indiquera que le produit en conservation a été décongelé.

Le sachet ou étui (cylindre, ampoule, anneau, prisme, sphère, parallélépipède -cube en particulier- etc. ) sont munis d'index de centrage dans leurs parties internes, de façon à pouvoir disposer le témoin de fusion au centre géométrique de leur cavité ; ils sont rendus étanches par construction après inclusion du témoin de fusion. Dans le cas de la deuxième variante (où l'étui se fracture), la partie interne du sachet ou de l'étui non occupée par le témoin est suffisante pour recueillir le liquide engendré par la fusion du témoin au cours d'un cycle de décongélation.

Les dessins annexés illustrent l'invention:

la figure I représente l'indicateur d'état dans un sachet en verre mince transparent, tel que conçu dans l'art antérieur (brevet français n° 2626072).

Le dispositif représenté sur la figure I comprend un sachet souple en verre mince transparent de 1 mm d'épaisseur muni de deux bandes de fixation (2) ; la partie destinée à recevoir le témoin de fusion constitue une enveloppe à surface carrée par exemple de 3 centimètres de côté, dont la distance au centre de chaque paroi est par exemple de l'ordre de 20 mm ; au centre de l'une des parois de l'enveloppe se trouve soudé perpendiculairement à celle-ci un axe (3) (représenté en coupe selon l'axe A-A) destiné à centrer le témoin de fusion (I) ; l'enveloppe est obtenue par rabattement d'une des surfaces constituant l'un des côtés qui se trouve soudé ou collé sur sa périphérie après que le témoin de fusion représenté par une sphère congelée (par exemple de 18 mm de diamètre) perforée en son centre y ait été déposée sur l'index situé au centre géométrique de la cavité du sachet.

Les autres figures représentent des réalisations perfectionnées de l'art antérieur.

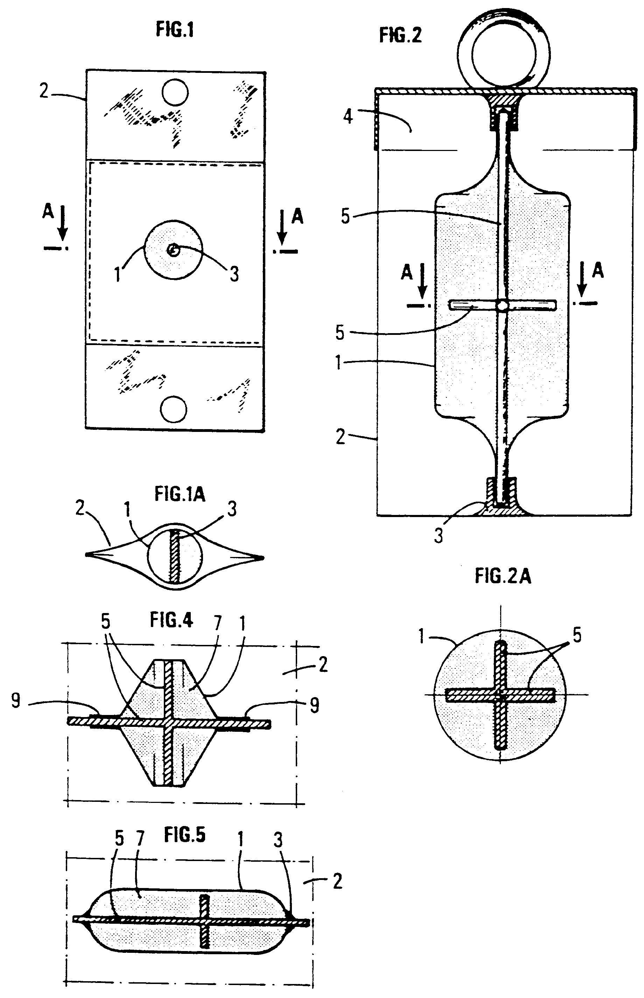

La figure 2 représente l'indicateur d'état (1) dans un boîtier cylindrique (2) en matière plastique rigide transparent.

La figure 2 représente ainsi un étui en verre mince à caractère fragmentaire. La nature préférée du liquide constituant le remplissage sera décrite ci-dessous. L'étui en forme d'ampoule de verre (verre mince) est disposé dans un boîtier par exemple de forme cylindrique (le boîtier peut avoir toute forme adéquate : cylindre, parallélépipède, sphère, etc ). Ce boîtier doit être étanche, au moins en partie transparent, et fabriqué dans un matériau qui n'altère pas les aliments. Ce boîtier est particulièrement adapté pour indicateur d'état de conservation destiné à un emballage de produit surgelé ou congelé.

Le dispositif de la figure 2 comprend un témoin de fusion (1) constitué de la dite ampoule (ou étui) sensiblement cylindrique dont le diamètre à titre d'exemple peut être de l'ordre de 5 à 30 mm et dont la hauteur à titre d'exemple est comprise entre 15 à 50 mm, plus particulièrement de l'ordre de 20 à 40 mm. Les axes orthogonaux (5) peuvent être par exemple en PVC éventuellement de couleur. Le témoin de fusion (1) est disposé à l'intérieur d'un cylindre (2) creux hermétique (boîtier cylindrique) qui à titre d'exemple est en matière plastique rigide transparent. Ce boîtier, représenté également en coupe sur la figure 2 (axe A-A) peut, à titre d'exemple avoir un diamètre de l'ordre de 20 à 40 mm de diamètre et une hauteur de 40 à 80 mm. Ce boîtier cylindrique est généralement muni de pattes de fixation (3) disposées sur son enveloppe extérieure. Il possède un couvercle (4) sur l'un de ses fonds qui vient se disposer par exemple par emboîtement par clip et collage éventuel ce qui permet d'assurer son étanchéité après que le témoin de fusion (1) ait été déposé au centre géométrique de la cavité intérieure du cylindre. Pour répondre à cet impératif, le témoin de fusion (1) est généralement moulé et congelé autour d'un dispositif support (5) (axes orthogonaux par exemple) qui prédétermine le centre géométrique de la cavité dans laquelle il est appelé à être placé.

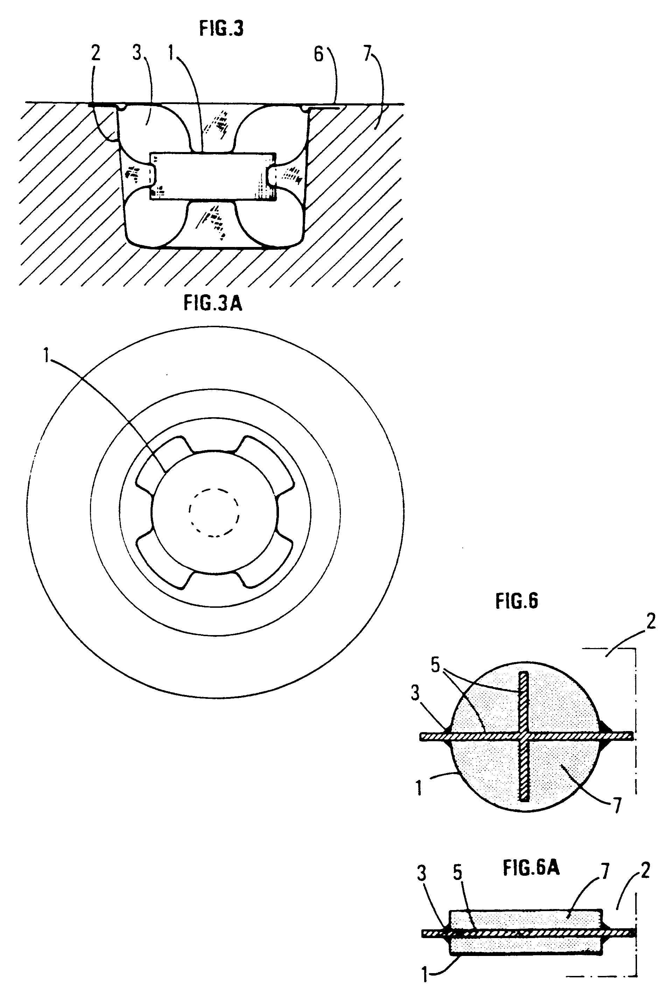

La figure 3 représente un intégrateur de température de forme cylindrique placé à l'intérieur d'une capsule de protection en matière plastique transparente, l'ensemble étant destiné à l'emballage d'un produit surgelé.

Le dispositif représenté sur la figure 3 comprend un témoin particulier de fusion (1) constitué par un étui de forme cylindrique (mais qui pourrait être par exemple de forme sphérique) rempli d'une substance colorée congelée, l'étui étant disposé à l'intérieur d'un tube creux hermétique (2) ou boîtier par exemple en matière plastique transparent, de faible épaisseur ayant la forme d'un parallélépipède et notamment d'un cube et muni d'au moins une patte de fixation (3). Ce boîtier possède un couvercle sur l'un de ses fonds, couvercle qui vient se disposer par emboîtement et collage après que le témoin de fusion ait été disposé au centre géométrique du parallélépipède. La figure 3 donne une représentation du profil avec la coupe de l'emballage (6) du produit congelé (9) et également une représentation de face.

Les figures 4, 5 et 6 représentent divers types d'étuis ou indicateurs d'état de conservation à une température inférieure à 0°C destinés à être introduits dans un boîtier adéquat soit de forme cylindrique comme dans la figure 2 soit de forme parallélépipèdique comme dans la figure 3. Les numéros de référence de ces figures sont celles des figures 1 à 3. Dans la figure 4, l'étui est prismatique, dans le figure 6, cet étui est un cylindre plat (ou anneau cylindrique) : (7) est le mélange eutectique.

La matière qui constitue l'enveloppe de ces étuis peut être en verre, en plastique (on peut être brisable et biodégradable dans le cas de la dite deuxième variante). Dans le cas dit de la première variante (l'ampoule ne se brise pas), la condition du choix de l'enveloppe implique que son coefficient de dilatation cubique soit inférieur à celui du liquide qui le remplit, de façon à ne pas provoquer sa rupture lors de la congélation des aliments (ou autres produits tels que pharmaceutiques) auxquels il se trouve adjoint. Dans le cas de la dite deuxième variante (l'ampoule se brise), la condition du choix de l'enveloppe implique que son coefficient de dilation cubique soit supérieur à celui du liquide qui le remplit, de façon à provoquer sa rupture lors de la congélation des aliments auxquels il se trouve adjoint.

Dans le cas de la deuxième variante (technique préférable à la dite première variante), l'enveloppe se rompt (ou s'autodétruit dans le cas d'une matière biodégradable) de manière à favoriser l'écoulement du liquide ou de la matière. Ainsi l'étui qui peut être en verre ou en plastique pouvant être également réalisé à l'aide d'un film biodégradable, à effet retardé, rempli d'un liquide eutectique. Les caractéristiques physiques de la matière constituant l'étui sont telles qu'en ambiance de congélation la dilatation du liquide provoque sa rupture ou sa dégradation de manière à favoriser lors d'une décongélation la liquéfaction du volume témoin obtenu à l'intérieur de l'étui.

Lorsqu'une substance liquide est utilisée dans l'étui pour être solidifiée selon l'invention, celle-ci est de préférence constituée d'un ou plusieurs mélanges eutectiques associés de manière judicieuse.

Un eutectique est un mélange de deux ou plusieurs constituants : lors du changement de phase liquide-solide ou solide-liquide par variation de la température, la composition de la phase solide reste la même que celle de la phase liquide (pas de démixtion). Par ailleurs, ce changement de phase s'effectue à température constante.

Il existe plusieurs formules eutectiques dont un constituant est l'eau et dont les points de cristallisation (ou fusion) sont compris entre - 24 °C et 0 °C : mélanges de sels minéraux et d'eau ou de composés organiques et d'eau.

Le mélange eutectique 67,5 % pds eaux + 32,5 % pds carbamide (ou carbonyl diamide : CON H) est l'un des mélanges préférés selon l'invention : son point de cristallisation est de - 11.5 °C. Si on place ce mélange dans un congélateur à la température de - 25 °C, le mélange va cristalliser à la température de - 11.5 °C.

En pratique, les mélanges renferment 65-70 % d'eau et 30-35 % de carbamide pour être utilisés, de préférence 67-68 % d'eau et 32-33 % de carbamide, ces proportions dépendant des températures à atteindre, par exemple - 12 °C.

Il s'avère et, c'est là un autre objet de l'invention, que la présence d'un agent nucléant dans ce mélange eutectique, en particulier dans le mélange eau-carbamide, permet une cinétique de cristallisation beaucoup plus grande et plus homogène. On a ainsi pu faire ressortir le rôle déterminant de composés du type aluminate de nickel, aluminate de cobalt, silicate de nickel, silicate de cobalt, alumino silicate de nickel et alumino silicate de cobalt. La structure cristalline de ces composés, de préférence du type spinelle, permet d'initier par phénomène d'isomorphie la cristallisation du mélange eutectique en évitant notamment une éventuelle surfusion du mélange.

La teneur de cet agent nucléant est de préférence de 0,1 à 5 % pds par rapport au mélange eutectique décrit ci-dessus.

Par ailleurs si l'on utilise ce mélange eutectique eau-carbamide, il est préférable de rajouter en plus de cet agent nucléant 0,1 à 2 % pds d'un composé du type acide organique, par exemple acide benzoïque, acide acétylsalicylique, acide acétique dont le rôle essentiel est de maintenir le pH du mélange inférieur à 7 (de préférence 3 à 6). Un acide minéral peut aussi être utilisé dans les mêmes proportions.

L'indicateur d'état de conservation pour produits congelés ou réfrigérés de type industriel ou alimentaires est donc caractérisé par l'utilisation d'un témoin de fusion représenté par un volume géométrique d'une substance congelée, moulée sur un dispositif support (étui) placé à l'intérieur d'une enveloppe de protection extérieure en matière plastique de préférence transparente (boîtier).

L'indicateur d'état de conservation comporte une enveloppe en matière plastique de préférence transparente dont la partie interne reçoit ou est équipée d'un dispositif support qui détermine son centre géométrique.

Ainsi l'indicateur d'état de conservation est caractérisé par l'utilisation d'un dispositif support (étui) pouvant selon le type de boîtier ou enveloppe de protection extérieure retenu, être un axe ou un ensemble d'axes concourant au centre géométrique de l'enveloppe de protection ou l'utilisation d'index de centrage venus de moulage lors de la réalisation de l'enveloppe de protection et servant à positionner le volume de la substance congelée constituant le témoin de fusion de façon que les centres géométriques du volume témoin et de la partie interne de l'enveloppe soient de préférence confondus.

L'indicateur d'état de conservation renfermera de préférence tout liquide produit ou mélange rendu fluorescent, nécessaire à l'obtention par cryogénie, d'un volume de substance congelée, ou réfrigérée, moulé sur un dispositif support ou non, dont la température de fusion prédéterminée correspond à une valeur de température ambiante inacceptable de bonne conservation pour le produit auquel il est adjoint.

Cet indicateur d'état de conservation se caractérise également de préférence par son fonctionnement dans toutes les positions, avec la disparition du témoin lors d'une décongélation, et la mise en évidence du dispositif support sur lequel il a été moulé, ou la mise en évidence du dispositif constitué d'index de centrage, et d'une cavité à fond coloré dans laquelle il était placé, fournissant ainsi un élément primordial d'observation visuel permettant de conclure au fonctionnement en tout ou rien du dispositif.

Un tel indicateur d'état de conservation se caractérise par sa conception technique qui permet une fabrication indépendante, afin de constituer des ensembles de produits différents dont le fonctionnement correspond à des températures ambiantes prédéterminées de décongélation, ou de conservation, inférieures ou supérieures à zéro degré centigrade.

La présente invention est intéressante par exemple dans les domaines suivants, et à ce titre non limitatif :

SANTE

– Pour accompagner les produits alimentaires congelés, surgelés réfrigérés pour lesquels une décongélation recongélation inopinée propice à la génération microbienne est préjudiciable aux produits conservés.
– Pour accompagner les produits réfrigérés (viandes, poissons etc.) lors d'un transport à l'importation ou à l'exportation ou en métropole.
– Pour accompagner des produits pharmaceutiques.

INDUSTRIE

– Pour accompagner certains produits de synthèse dans le cas où il est nécessaire de surveiller les ambiances de conservation à partir d'éléments simples affectant l'état physique de certains produits (exemples : point de ramollissement, de goutte, de congélation, de fusion qui sont des valeurs significatives pour la réalisation d'un témoin).

COMMERCE

– Pour accompagner tous les produits réfrigérés faisant l'objet d'échange pour prouver le bon état de conservation des produits réfrigérés.

DANS LE GRAND PUBLIC

– Pour les utilisateurs de congélateurs afin de surveiller les produits de fabrication familiale. Prouver aux distributeurs d'énergie d'électricité que les produits mis en conservation ont été décongelés par suite d'une coupure de courant.

**Revendications**

**1)** Indicateur d'état de conservation pour produits congelés ou réfrigérés de type industriel ou alimentaire caractérisé par l'utilisation d'un étui renfermant un témoin de fusion représenté par un volume géométrique d'une substance congelable. moulé sur un dispositif support placé à l'intérieur d'un boîtier ou enveloppe de protection au moins en partie transparent, le dit boîtier (ou la dite enveloppe) ayant une forme choisie notamment dans le groupe constitué par un cylindre, une sphère et un parallélépipède, le dit étui au moins en partie transparent ayant une forme choisie dans le groupe constitué par un cylindre, une ampoule de forme sensiblement cylindrique, un anneau cylindrique, un parallélépipède et une sphère, l'indicateur étant en outre caractérisé en ce que dans une première variante l'étui est construit en une matière qui ne se brise pas sous l'effet de la congélation du dit témoin de fusion, ou en ce que dans une deuxième variante, l'étui est construit en une matière brisable, éventuellement biodégradable, permettant au dit étui de se briser ou de s'autodétruire sous l'effet de la congélation du dit témoin de fusion.

**2)** Indicateur selon la revendication 1) dans lequel le matériau dans lequel est réalisé soit le boîtier (ou enveloppe) soit l'étui est en verre ou en plastique ou en un matériau équivalent.

**3)** Indicateur selon l'une des revendications 1) et 2) dans lequel le boîtier (ou enveloppe) est transparent.

**4)** Indicateur selon l'une des revendications 1) et 2) dans lequel l'étui est au moins en partie transparent.

**5)** Indicateur d'état de conservation selon l'une des revendications 1) à 4) caractérisé par l'utilisation d'une enveloppe de protection (boîtier), dont la partie interne reçoit ou est équipée d'un dispositif support (étui) qui détermine son centre géometrique.

**6)** Indicateur d'état de conservation selon la revendication 5) caractérisé par l'utilisation d'un dispositif support (étui) pouvant selon le type de boîtier ou enveloppe de protection extérieure retenu, être un axe, un ensemble d'axes concourant au centre géométrique de l'enveloppe de protection ou l'utilisation d'index de centrage venus de moulage lors de la réalisation de l'enveloppe de protection et servant à positionner le volume de substance congelée ou à congeler devant constituer le témoin de fusion de façon que les centres géométriques du volume témoin et de la partie interne de l'enveloppe soient confondus.

**7)** Indicateur d'état de conservation selon l'une des revendications 1) à 6) caractérisé par l'utilisation de toute substance, produit ou mélange rendu fluorescent, nécessaire à l'obtention par cryogénie, d'un volume congelé ou réfrigéré, moulé sur un dispositif support ou non, dont la température de fusion prédéterminée correspond à une valeur de température ambiante inacceptable de bonne conservation pour le produit auquel il est adjoint.

**8)** Indicateur d'état de conservation selon l'une des revendications 1) à 7) caractérisé par son fonctionnement dans toutes les positions, avec la disparition du témoin lors d'une décongélation, et la mise en évidence du dispositif support sur lequel il a été moulé, ou la mise en évidence du dispositif constitué d'index de centrage, et d'une cavité dont le fond est coloré et dans laquelle il était placé, fournissant ainsi un élément primordial d'observation visuel permettant de conclure au fonctionnement en tout ou rien du dispositif.

**9)** Indicateur d'état de conservation selon l'une des revendications 1) à 8) caractérisé par sa conception technique qui permet une fabrication indépendante, afin de constituer des ensembles de produits différents dont le fonctionnement correspond à des températures ambiantes prédéterminées de décongélation, ou de conservation, inférieures ou supérieures à zéro degré centigrade.

**10)** Utilisation d'un indicateur selon l'une des revendications 1) à 9) caractérisé en ce que l'étui renferme, à titre de dite substance, un mélange de constitution sensiblement eutectique dont le point de fusion eutectique est entre 0 et - 30°C, ce mélange contenant approximativement 30-35 % en poids de carbamide et 65-70 % en poids d'eau.

**11)** Utilisation selon la revendication 10) caractérisé en ce que le mélange eutectique renferme en outre au moins un aluminate, silicate ou silico-aluminate de nickel ou cobalt de structure spinelle.

**12)** Utilisation selon l'une des revendications 10) et 11) caractérisé en ce que le dit mélange renferme en outre au moins un acide organique ou minéral en quantité suffisante pour amener le pH à une valeur entre 3 et 6.

**13)** Utilisation selon le revendication 12) dans laquelle l'acide organique est l'acide benzoique.

**14)** Utilisation selon l'une des revendications 1) à 9) d'un dispositif support (étui) en verre ou en matière plastique ou réalisé à l'aide d'un film biodégradable à effet retardé, rempli d'un liquide eutectique.

FIG.1

FIG.2

FIG.1A

FIG.2A

FIG.4

FIG.5

FIG.3

FIG.3A

FIG.6

FIG.6A

8

EP 0 486 380 A1

**Office européen des brevets** — **RAPPORT DE RECHERCHE EUROPEENNE** — Numero de la demande

EP 91 40 3030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 119 511 (BOLLA)<br>* page 1, ligne 56 - page 2, ligne 46; figures 1-5 *<br>--- | 1-9 | G01K11/06 |
| D<br>Y | FR-A-2 626 072 (TOPORENKO)<br>* le document en entier *<br>--- | 1-9 | |
| A | FR-A-2 613 069 (RAME)<br>Titre<br>* page 4, ligne 20 - page 7, ligne 7; figures 1,1A-1C *<br>--- | 1-4,7-9 | |
| A | US-A-3 965 848 (SHOTKIN)<br><br>* colonne 3, ligne 20 - ligne 43; figures 2,5,8 *<br>--- | 1-3,5,6,<br>8,9 | |
| A | US-A-3 122 921 (KOCH)<br><br>* colonne 1, ligne 60 - colonne 3, ligne 26; figures 2A,2B *<br>--- | 1-3,5,9,<br>10,11 | **DOMAINES TECHNIQUES RECHERCHES (Int. Cl.5)** |
| A | US-A-4 191 125 (JOHNSON)<br><br>* colonne 2, ligne 29 - colonne 4, ligne 14; figures 1-3 *<br><br>----- | 1-4,9,<br>10,11 | G01K |

Le présent rapport a été établi pour toutes les revendications

| Lieu de la recherche | Date d'achèvement de la recherche | Examinateur |
|---|---|---|
| LA HAYE | 19 FEVRIER 1992 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9